Europäisches Patentamt

European Patent Office

Office européen des brevets

(19)

(11) Publication number: **0 080 987**

**A1**

(12)

# EUROPEAN PATENT APPLICATION

(21) Application number: **82850236.9**

(22) Date of filing: **19.11.82**

(51) Int. Cl.³: **C 03 B 37/16**
**D 01 G 1/04, B 26 D 7/06**

(30) Priority: **26.11.81 SE 8107038**

(43) Date of publication of application:
**08.06.83 Bulletin 83/23**

(84) Designated Contracting States:
**AT BE CH DE FR GB IT LI LU NL SE**

(71) Applicant: **AB ROVAC**
**Fritslavägen 82 Kinnahult**
**S-511 00 Kinna(SE)**

(72) Inventor: **Christensen Jan Arthur**
**Fjellvikvejen 11 Kjerringvink**
**N-3280 Tjodalyng(NO)**

(74) Representative: **Ryrlén, Evert et al,**
**ALFONS HEDBERGS PATENTBYRÅ AB**
**Aschebergsgatan 35**
**S-411 33 Göteborg(SE)**

(54) An improved cutter mechanism.

(57) A cutter mechanism for severing synthetic thread. The mechanism is particularly intended for cutting fibreglass roving (1). Two wheels (4, 5) are arranged to advance the roving which is thereafter passed between a cutter roller (6) and a back-up roller (7), cutting said roving into roving bundles.

Before the roving (1) reaches the feeder wheels (4, 5) its movements are guided by two guides (2, 3) which are provided with openings which are large-size compared with the thickness of the roving and which are placed in offset relationship, ensuring that the roving abuts against one edge of the first opening and against the opposite edge of the other opening. In this manner the roving is guided during its passage through the cutter mechanism.

Fig.1

## An Improved Cutter Mechanism

The present invention concerns a cutter mechanism, particularly a cutter mechanism intended to sever synthetic threads. The cutter mechanism in accordance with the invention is particularly useful to cut fibreglass roving.

In the operation of conventional cutters the fibreglass roving is fed up to the cutter roller on which the cutter knives are mounted and which is used to sever the roving, when the roving is introduced between the cutter roller and an abutting back-up roller and is advanced by said two rollers.

A considerable disadvantage inherent in this prior-art technique is the rapid wear of the cutter roller knife edges. The reason therefore is that the fibreglass roving is capable of withstanding considerable tensile stress but only very little tension in its transverse extension. As a result, the edges of the cutting knives will wear out as a consequence of the advancement of the roving, since the knives also serve as a roving propulsion means. Obviously, this leads to operational disturbances caused by the necessary frequent exchanges of cutter knives. In addition, the back-up roller, which is made from rubber, wears out at the same rate as the knives.

A further disadvantage found in conventional cutter mechanisms is the unsatisfactory jet pattern, which is due to the wandering of the roving along the cutter roller and thus the resulting wandering of the jet pattern.

The problems outlined above are solved in a cutter mechanism of the kind comprising roller holding cutter-knives and an abutting back-up roller. The subject invention is characterised by two abutting wheels which are arranged to advance the roving and positioned ahead of the cutter roller, said wheels and said rollers arranged to rotate essentially synchronously, the arrangement being such as to allow the relative speeds of the wheels and of the rollers to be selected to obtain the desired properties of the target pattern of the roving.

According to a further characteristic of the invention two guides are provided at the point of introduction of the roving into the cutter mechanism, said guides arranged in offset relationship, ensuring that while being fed into the cutter mechanism the roving thread abuts against the edges of both guides and that the openings formed in the guides are large compared with the thickness of the roving.

Further characteristics of the invention will appear from the dependent claims.

The invention will be described in closer detail in the following with reference to the accompanying drawings, wherein

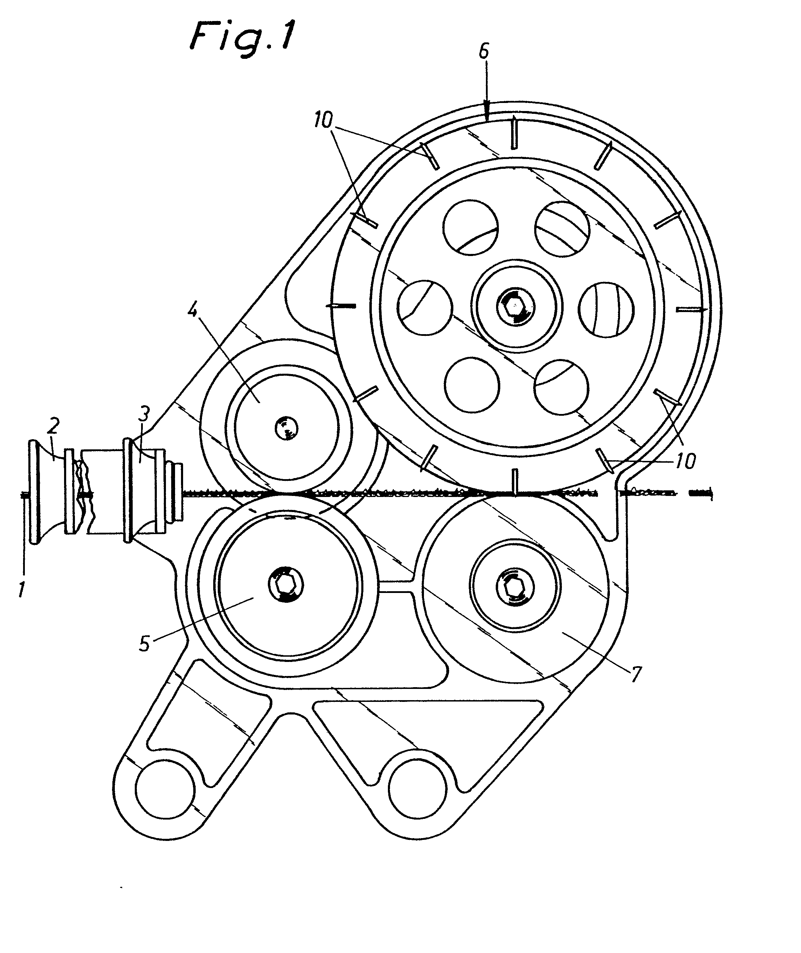

Fig. 1 is a lateral view of a cutter mechanism in accordance with the invention, the protective cover having been removed,

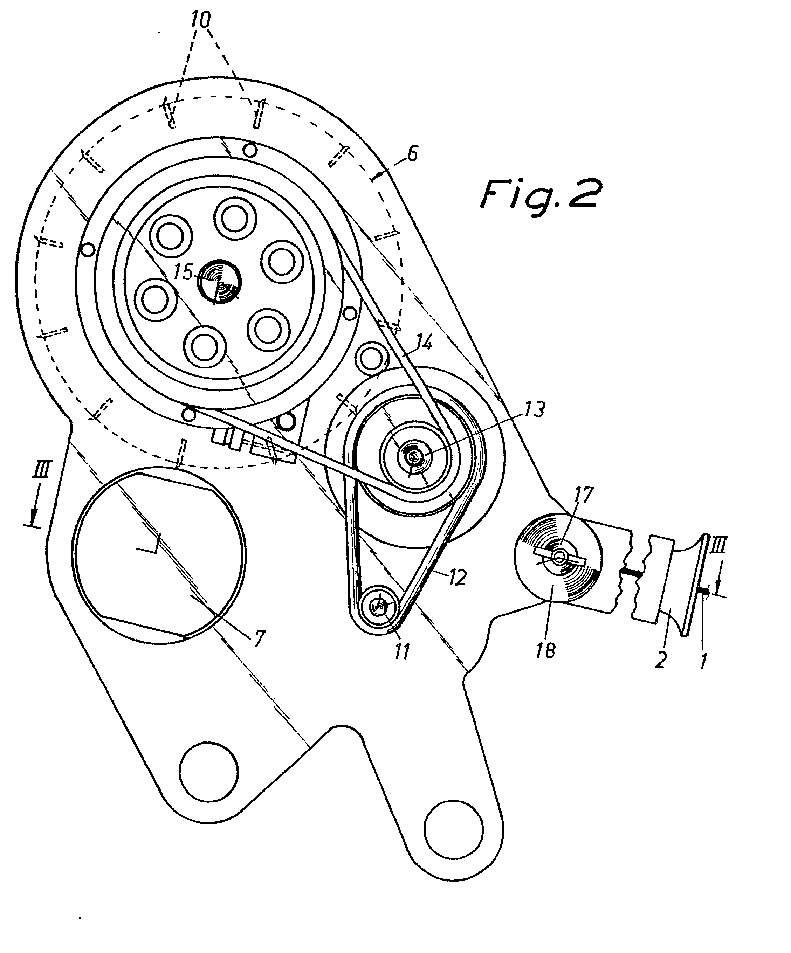

Fig. 2 is a lateral view of the cutter mechanism of Fig. 1 but illustrates the mechanism in a view from the opposite side,and

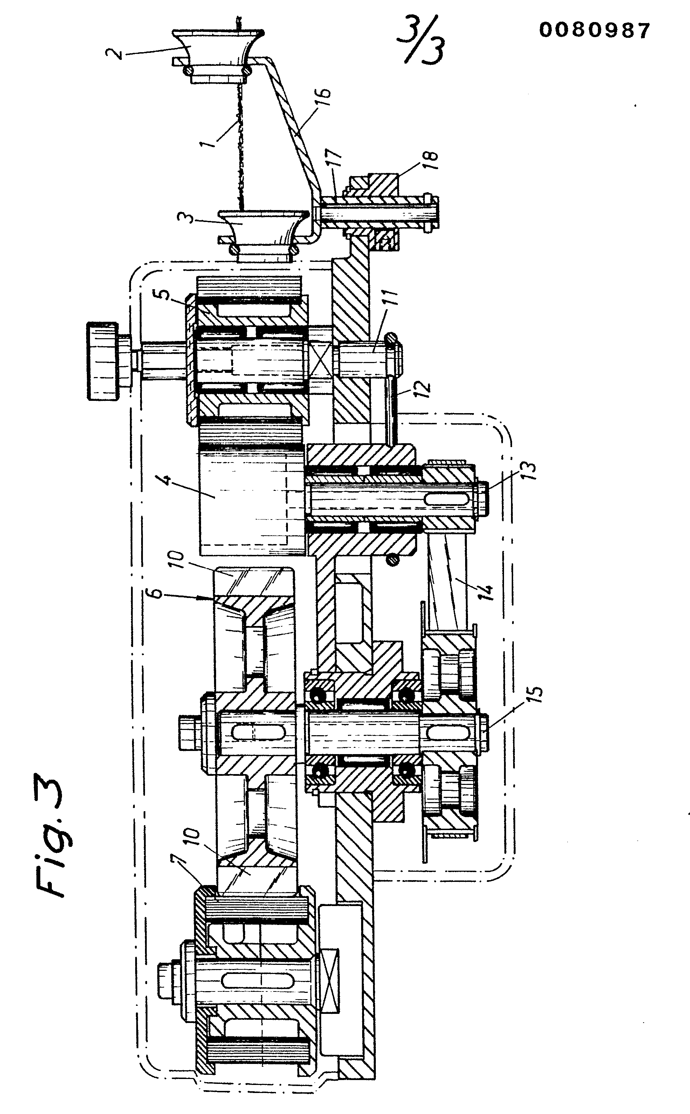

Fig. 3 is a cross-sectional view along line III-III of Fig. 2.

A thread 1 of fibreglass roving is advanced through two guides 2, 3 up to two feeder wheels or rollers 4, 5 one of which , 5, is sheathed in rubber and the other one, wheel 4, may be of e.g. aluminium. Having passed between these two wheels the roving reaches a cutter roller 6 on which are provided knife blades, and a back-up roller 7 abutting against the roller 6. The roller 7 preferably encloses the edges of the cutter roller.

The cutter roller consists in a manner known per se of a roller 6. A number of knives 10 are mounted on the roller, spaced equally around the roller circumference and in such positions that the knife edges project beyond the roller periphery. The back-up roller 7 is designed to ensure that the points of contact of the knives with the roller 7 are displaced upon each revolution of the rollers, whereby unnecessary spot wear is avoided.

The drive effect is on the roller 7 and because of the friction between this roller and the cutter roller 6 the drive is transmitted to the wheels 4 and 5 with the aid of a belt 14.

Owing to the belt drive arrangement as shown the cutter roller 6 will rotate essentially in synchrony with the two feeder wheels. The peripheral speed of all wheels and rollers will be approximately equal. No load will be applied on the cutter roller as a result of the advancement of the fibreglass roving, and consequently the knives will not be worn out as quickly as when the load from the roving advancement is in fact applied on this roller.

By imparting a slightly higher speed to the cutter roller 6 and the back-up roller 7 compared with that of the two feeder wheels 4, 5 (the difference in speed amounting to but some thousandths of the speed of the rollers) the roving will be tensioned and compressed, which gives a more compact target pattern. When the speed of the cutter roller 6 and the back-up roller 7 is slightly lower than that of the feeder wheels 4, 5 the roving strands will separate slightly and the roving target pattern consequently will be more scattered. In this case, the difference in speeds must, however, be minute and carefully controlled to positively ensure that the roving 1 is not led around any one of the feeder wheels 4, 5 or even away from the mechanism.

The two guides 2, 3 are mounted on a plate 16 of a particular shape ensuring that the guides are in offset positions relative to one another in the transverse directic of the roving thread 1. The magnitude of the offset is such that during its feeding-in into the mechanism the thread will abut against one edge of the first guide and against the opposite edge of the second guide. The result is that the thread will not wander in its transverse direction during the severing operation. Consequently the jet pattern will not either wander after the thread has been severed. This ensures a more precise and improved jet pattern. The cutter mechanism in accordance with the subject invention thus is r efficient than prior-art cutter devices of conventional type

Owing to the use of two guides 2, 3 provided with large-size openings or mouths, the latter will not clog up. Even knots interconnecting bundles of roving threads will pass through the openings without difficulty.

The plate 16 on which the guides 2, 3 are provided is mounted on a member 17 which is movably attached on a holder 18. Because of this arrangement the guides may be displaced laterally, which allows the roving thread to be moved along the rollers and therefore also displacement of the jet pattern.

The embodiment of the invention described in the aforegoing is to be regarded as one example only and a number of modifications are possible within the scope of the appended claims. The mechanism driving the various wheels and rollers could of course be designed and arranged in a different way from that shown without departing from the inventive idea, that is, that the advancement of the roving is not effected by the cutter

5

roller but by two separate wheels rotating at a speed
that is essentially in synchrony with the rotational
speed of the cutter roller.

Claims

1. A cutter mechanism for severing synthetic thread, such as fibreglass roving (1) and the like, the roving being severed by a roller (6) provided with knives, said roller abutting against a back-up roller (7), c h a r a c t e r i s e d  b y two abutting wheels (4, 5) which are arranged to advance the roving and positioned ahead of the cutter roller, said wheels and said rollers arranged to rotate essentially synchronously, the arrangement being such as to allow the relative speeds of the wheels (4, 5) and of the rollers (6, 7) to be selected to obtain the desired properties of the target pattern of the roving.

2. A cutter mechanism according to claim 1, c h a r a c t e r i s e d  i n  t h a t  two guides (2, 3) are provided at the point of introduction of the roving into the cutter mechanism, said guides arranged in offset relationship, ensuring that while being fed into the cutter mechanism the roving thread abuts against the edges of both guides and in that the openings in the guides (2, 3) are large compared with the thickness of the roving.

3. A cutter mechanism according to claim 1 or 2, c h a r a c t e r i s e d  i n  t h a t  at least one of the guides (2, 3) is movable in the transverse direction of the roving.

4. A cutter mechanism according to any one of the preceding claims, c h a r a c t e r i s e d   i n   t h a t both guides (2, 3) are movable in the transverse direction of the roving while maintaining their relative positions.

5. A cutter mechanism according to any one of the preceding claims, c h a r a c t e r i s e d   i n   t h a t the guides (2, 3) are mounted on a plate (16) of a particular configuration, said plate attached to a movable member (17).

1/3

0080987

Fig.1

Fig.2

Fig. 3

0080987

European Patent Office

**EUROPEAN SEARCH REPORT**

0080987
Application number

EP  82 85 0236

## DOCUMENTS CONSIDERED TO BE RELEVANT

| Category | Citation of document with indication, where appropriate, of relevant passages | Relevant to claim | CLASSIFICATION OF THE APPLICATION (Int Cl $^3$) |
|---|---|---|---|
| X | US-A-3 063 609  (HUPP) <br> *The whole specification* | 1 | C 03 B   37/16 <br> D 01 G    1/04 <br> B 26 D    7/06 |
| | --- | | |
| A | GB-A-2 034 772  (PILKINGTON BROTHERS) <br> *Figure 4* | 1 | |
| | ----- | | |
| | | | **TECHNICAL FIELDS SEARCHED (Int. Cl. $^3$)** |
| | | | C 03 B   37/00 <br> D 01 G    1/00 <br> B 26 D    7/00 |

The present search report has been drawn up for all claims

| Place of search | Date of completion of the search | Examiner |
|---|---|---|
| THE HAGUE | 18-03-1983 | VAN DEN BOSSCHE W.L. |